# EUROPÄISCHE PATENTSCHRIFT

(11) **EP 1 291 471 B1**
(45) Veröffentlichungstag und Bekanntmachung des Hinweises auf die Patenterteilung: **21.12.2005**
(21) Anmeldenummer: 01124921.6
(22) Anmeldetag: 19.10.2001
(51) Int. Cl.: E04B 1/344, E04B 1/348, B60S 3/00

(54) **Mobile Kabine**
Mobile cabin
Cabine mobile

(30) Priorität: 05.09.2001 DE 10143452
(43) Veröffentlichungstag der Anmeldung: 12.03.2003
(73) Patentinhaber: Ammer, Eckhardt, 86199 Augsburg (DE); Gruber, Robert, 86382 Horgau (DE)
(72) Erfinder: Ammer, Eckhardt, 86199 Augsburg (DE); Gruber, Robert, 86382 Horgau (DE)
(74) Vertreter: Munk, Ludwig

(56) Entgegenhaltungen:
- WO-A-98/01330
- US-A- 2 981 266
- US-A- 5 596 844

## Beschreibung

Die Erfindung betrifft eine mobile Kabine, insbesondere eine mobile Nasskabine, wie KFZ-Waschkabine, KFZ-Dichtprüfkabine etc..

Eine derartige Kabine ist aus WO-A-9 801 330 bekannt.

In der Betriebspraxis ergibt sich oft das Problem, dass die vorhandenen Raumkapazitäten für Spitzenbelastungen nicht ausreichen und dass der Bau stationärer Anordnungen wegen langer Genehmigungsverfahren kurzfristig nicht möglich ist.

Hiervon ausgehend ist es daher die Aufgabe der vorliegenden Erfindung, mit einfachen und kostengünstigen Mitteln eine mobile Kabine zu schaffen, die einfach transportierbar und schnell errichtbar ist.

Diese Aufgabe wird durch die im Anspruch 1 angegebene Kombination gelöst. Dabei kommt eine mobile Kabine in Vorschlag, die aus wenigstens zwei paarweise nebeneinander angeordneten, nach Art von Abrollcontainern mit straßentauglichen Abmessungen aufgebauten Moduln besteht, die jeweils ein Untergestell sowie eine auf diesem aufnehmbare Aufbauanordnung aufweisen, wobei die Untergestelle, die im Bereich ihrer einander zugewandten Flanken miteinander verbindbar sind, jeweils einen Grundrahmen mit Container-Bewegungsmitteln aufweisen und wobei die Aufbauanordnungen, die zumindest jeweils eine Seitenwand und eine Dachhälfte aufweisen, im Bereich der einander zugewandten Seiten offen und im Bereich der Fuge zwischen den einander zugewandten Dachhälften durch eine Überbrückungseinrichtung überbrückbar sind.

Die der erfindungsgemäßen Kabine zugrundeliegenden Moduln können wie Abrollcontainer auf Straßenfahrzeuge verladen und schnell über größere Distanzen transportiert werden. Die genannten Moduln können daher werkseitig weitestgehend vorgefertigt werden. Zur Erstellung der erfindungsgemäßen Kabine werden lediglich mindestens zwei derartige Moduln paarweise nebeneinander angeordnet und miteinander verbunden. Es ergeben sich daher geringe Herstellungs-, Transport- und Montagekosten und daher insgesamt günstige Gesamtkosten. Das Untergestell der Moduln kann mit einfachen Mitteln so ausgebildet werden, dass sich eine hohe Eigenstabilität und Tragfähigkeit ergibt, die den Einsatz von Hebezeugen zum Auf- und Abladen ermöglicht. Dadurch, dass die Aufbauanordnungen an den einander zugewandten Seiten offen sind, wird trotz der Containerbauweise ein geräumiger Innenraum erreicht. Mit den erfindungsgemäßen Maßnahmen wird dementsprechend die oben genannten Aufgabe auf höchst einfache und kostengünstige Weise gelöst.

Die im Untergestell angeordnete Wanne ergibt einen hermetischen bodenseitigen Abschluss, so dass keine Flüssigkeiten bodenseitig versickern können. Gleichzeitig ermöglicht die Wanne in vorteilhafter Weise die Aufnahme eines Flüssigkeitsvorrats, der immer wieder verwendbar ist. In vielen Fällen, wie beispielsweise beim Waschen oder bei der Dichtheitsprüfung von PKWs etc., kann daher im Umpumpverfahren gearbeitet werden, wodurch ein geringer Flüssigkeitsverbrauch und damit eine gute Betriebswirtschaftlichkeit erreicht werden. Infolge der rostartigen Ausgestaltung des Laufbodens kann die Flüssigkeit großflächig in die Wanne ablaufen, so dass auch in Fällen mit starkem, momentanem Flüssigkeitsanfall Überflutungen nicht zu befürchten sind.

Vorteilhafte Ausgestaltungen und zweckmäßige Fortbildungen der übergeordneten Maßnahmen sind in den Unteransprüchen angegeben. So kann das Untergestell mit am Grundrahmen angebrachten Laufrollen und mit am Grundrahmen angebrachten Anschlussmitteln für einen abnehmbaren Aufnahmebügel versehen sein, an dem ein Hebezeug angreifen kann. Diese Maßnahmen erleichtern die Verladung der der erfindungsgemäßen Kabine zugeordneten Moduln auf ein Transportfahrzeug.

Die eingangs geschilderte Problematik stellt sich besonders im Zusammenhang mit Räumen mit hinsichtlich der zu erwartenden, flüssigen Rückstände problematischer Sondernutzung, wie KFZ-Waschkabinen, Dichtprüfkabinen und dergleichen. Eine besondere Aufgabe besteht daher darin, eine für Sondernutzungsflälle im Nassbereich besonders gut geeignete mobile Kabine zu schaffen. Hierzu wird vorgeschlagen, dass jedes Untergestell eine von seinem Grundrahmen nach oben abstehende, umfangsseitige Stützeinrichtung und wenigstens eine in den von der Stützeinrichtung umfassten Raum einsetzbare, vorzugsweise mit Anschlussstutzen für Ver- und/oder Entsorgungsleitungen versehene Wanne sowie einen diese überspannenden, durch die umlaufende Stützeinrichtung abgestützten, rostartigen Laufboden aufweist, unter welchem eine den Abstand der beiderseitigen Wannen überbrückende, mittlere Abdeckung vorgesehen ist.

Die im Untergestell angeordnete Wanne ergibt einen hermetischen bodenseitigen Abschluss, so dass keine Flüssigkeiten bodenseitig versickern können. Gleichzeitig ermöglicht die Wanne in vorteilhafter Weise die Aufnahme eines Flüssigkeitsvorrats, der immer wieder verwendbar ist. In vielen Fällen, wie beispielsweise beim Waschen oder bei der Dichtheitsprüfung von PKWs, kann daher im Umpumpverfahren gearbeitet werden, wodurch ein geringer Flüssigkeitsverbrauch und damit eine gute Betriebswirtschaftlichkeit erreicht werden. Infolge der rostartigen Ausgestaltung des Laufbodens kann die Flüssigkeit großflächig in die Wanne ablaufen, so dass auch in Fällen mit starkem, momentanem Flüssigkeitsanfall Überflutungen nicht zu befürchten sind. Dadurch, dass die Aufbauanordnungen an den einander zugewandten Seiten offen sind, wird trotz der Containerbauweise ein geräumiger Innenraum erreicht. Mit den erfindungsgemäßen Maßnahmen wird dementsprechend die oben genannten Aufgabe auf höchst einfache und kostengünstige Weise gelöst.

In weiterer Fortbildung der übergeordneten Maßnahmen ist das Untergestell mit einer den Randabstand der Wanne von den benachbarten Kabinenwänden überbrückenden, randseitigen Abdeckung versehen. Diese randseitige Abdeckung erleichtert trotz zuverlässiger, randseitiger Abdichtung die Erzielung eines einfachen Wandaufbaus.

In vorteilhafter Weise kann die Stützeinrichtung durch voneinander beabstandete, vertikale Tragstutzen gebildet werden, wobei die Aufbauanordnung im Abstand der Tragstutzen angeordnete, vertikale Standholme aufweisen kann, die unter Zwischenschaltung eines die zugeordnete, randseitie Abdeckung bildenden Drainageblechs an die Tragstutzen angeflanscht sein können. Diese Maßnahmen ergeben in vorteilhafter Weise eine zuverlässige, vertikale Kraftdurchleitung von den Standholmen auf die jeweils zugeordneten Tragstutzen, so dass Biegebeanspruchungen unterbleiben. Gleichzeitig ergibt sich eine einfache und zuverlässige Befestigung der randseitigen Abdeckung in Form einer Einspannung zwischen den Tragstutzen des Grundgestells und den Standholmen der Aufbauanordnung.

Eine weitere zweckmäßige Maßnahme kann darin bestehen, dass die Stirnwände der Aufbauanordnungen mit aneinander anschließenden Toröffnungen versehen sind, denen vorzugsweise gegenläufig bewegbare Torblätter zugeordnet sein können. Die Toröffnungen ermöglichen eine zuverlässige Beschickung der Kabine. Die Torblätter gewährleisten eine zuverlässige Verschließbarkeit.

Vorteilhaft können im Bereich der Toröffnungen am Untergestell ansetzbare Auf- und/oder Abfahrrampen vorgesehen sein. Dies ermöglicht auf einfache Weise eine Überbrückung der Höhe des Untergestells.

In weiterer, vorteilhafter Ausgestaltung der übergeordneten Maßnahmen kann die Aufbauanordnung mit einem schwenkbar auf der Seitenwand aufgenommenen Dachflügel versehen sein, der in einer schräg geneigten Position mit seinem oberen Rand am Dachflügel der jeweils benachbarten Aufbauanordnung abstützbar ist. Aufgrund der schwenkbaren Lagerung der Dachflügel können diese einfach von einer horizontalen Transportstellung in eine demgegenüber geneigte Arbeitsstellung gebracht werden und umgekehrt. Es lassen sich daher praktisch ohne Demontage des Dachflügels eine große lichte Innenhöhe sowie eine geringe Transporthöhe erreichen.

Eine weitere zweckmäßige Maßnahme kann darin bestehen, dass die obere Fugenabdeckung der Aufbauanordnungen als die Fuge zwischen den aneinander festgelegten Dachflügeln überbrückendes, auf dachflügelseitige Führungen aufschiebbares Firstblech ausgebildet sein. Dies ermöglicht eine einfache Montage bzw. Demontage der oberen Fugenabdeckung und gewährleistet gleichzeitig eine zuverlässige Fugenabdichtung.

Eine besonders zu bevorzugende, zu einer vergleichsweise großen Raumhöhe führende Ausgestaltung der übergeordneten Maßnahmen kann darin bestehen, dass die Seitenwand jeder Aufbauanordnung einen unteren, am Untergestell stationär fixierbaren Abschnitt und einen gelenkig hiermit verbundenen, oberen Abschnitt aufweist, an dem die zugeordnete Hälfte starr angebracht ist.

Diese Maßnahmen ermöglichen in vorteilhafter Weise ein Abklappen des oberen Abschnitts der Seitenwand samt der fest hiermit verbundenen Dachhälfte, die im abgeklappten Transportzustand mit ihrem oberen Rand auf dem Untergestell aufsetzbar ist. Für den Transportzustand lässt sich dementsprechend eine etwa trapezförmige Querschnittskonfiguration mit parallel zum Untergestell verlaufendem, oberem Wandabschnitt sowie senkrecht hierzu verlaufendem, unterem Wandabschnitt und geneigt hierzu verlaufender Dachhälfte erreichen. Dadurch, dass diese in der Transportstellung mit ihrem freien Rand auf dem Untergestell aufliegt, ergibt sich in vorteilhafter Weise eine hohe Transportstabilität, ohne dass zusätzliche Abstützungen notwendig sind. Im hochgeklappten Zustand wird die Höhe der Seitenwand um den oberen Abschnitt vergrößert, wodurch eine große Raumhöhe erreicht wird. Dadurch, dass die zugeordnete Dachhälfte am oberen Wandabschnitt der Seitenwand starr angebracht ist, lässt sich auf einfache Weise auch ein spaltfreier Dachanschluss erreichen.

Vorteilhaft können die vertikalen Standholme der Seitenwand jeweils zwei aneinander anschließende Abschnitte enthalten, die an den einander zugewandten Enden mit Flanschen versehen sind, die über eine im Bereich ihres der Kabineninnenseite zugewandten Rands angeordnete Gelenkanordnung zusammenhängen und durch sie durchgreifende Schrauben lösbar aneinander festlegbar sind. Diese Maßnahmen gewährleisten eine zuverlässige Verbindung und exakte Fluchtung der beiden Holmabschnitte im Aufbauzustand und dennoch eine einfache Schwenkbarkeit.

Eine andere vorteilhafte Maßnahme kann darin bestehen, dass die einander zugewandten oberen Enden der einander gegenüberliegenden Dachhälften unter Zwischenschaltung eines Brückenstücks aneinander festlegbar sind. Diese Maßnahme stellt sicher, dass die beiden Dachhälften bei bereits zusammengerückten und miteinander verbundenen Untergestellen aneinander vorbeigeschwenkt werden können. Die Untergestelle der beiden Moduln können daher in vorteilhafter Weise bereits verbunden werden, bevor die oberen Wandabschnitte mit angebrachten Dachhälften in die Aufbaustellung gebracht werden, was jede Kippgefahr ausschließt.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine Stirnansicht einer erfindungsgemäßen mobilen Kabine,
- Figur 2: eine Seitenansicht der erfindungsgemäßen mobilen Kabine,
- Figur 3: eine Teilansicht eines Moduls der erfindungsgemäßen Kabine im Transportzustand,
- Figur 4: eine vergrößerte Darstellung der Einzelheit IV in Figur 1,
- Figur 5: eine vergrößerte Darstellung der Einzelheit V in Figur 1,
- Figur 6: eine vergrößerte Darstellung eines Schnitts entlang der Linie VI/VI in Figur 2,
- Figur 7: eine vergrößerte Darstellung eines Schnitts entlang der Linie VII/VII in Figur 2,
- Figur 8: eine vergrößerte Darstellung eines Schnitts entlang der Linie VIII/VIII in Figur 1,
- Figur 9: einen Querschnitt durch eine andere Ausführung einer erfindungsgemäße Kabine,
- Figur 10: die Einzelheit II in Figur 9 in vergrößertem Maßstab,
- Figur 11: die Einzelheit III in Figur 9 in vergrößertem Maßstab und
- Figur 12: die Einzelheit IV in Figur 9 in vergrößertem Maßstab.

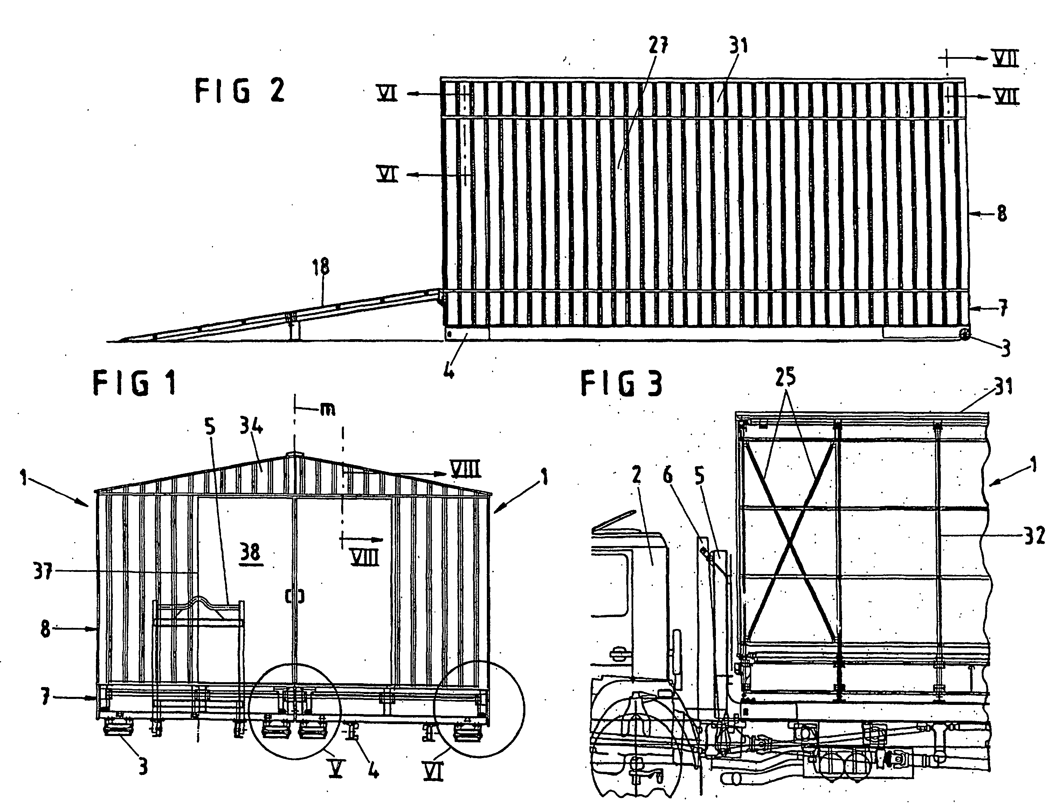

Die den Figuren 1 - 8 zugrundeliegende, mobile Kabine, bei der es sich beispielsweise um eine PKW-Waschkabine handeln kann, deren Innenraum eine Nasszelle bildet, besteht, wie am besten aus Figur 1 erkennbar ist, aus wenigstens zwei paarweise nebeneinander angeordneten, an der in Figur 1 durch eine strichpunktierte Linie angedeuteten Symmetrieebene m zusammenstoßenden Moduln 1. Im dargestellten Beispiel entspricht, wie am besten aus Figur 2 erkennbar, die Modullänge der gewünschten Kabinenlänge, so dass lediglich zwei nebeneinander angeordnete Moduln 1 benötigt werden. Selbstverständlich könnten aber auch mehrere, derartige Modulpaare zur Erzielung einer größeren Kabinenlänge hintereinander angeordnet sein.

Die Moduln 1 sind jeweils nach Art eines Abrollcontainers, der straßentaugliche Abmessungen aufweist und dementsprechend, wie aus Figur 3 erkennbar ist, auf einem Straßenfahrzeug 2 aufnehmbar ist, ausgebildet. Hierzu sind die Moduln 1, wie aus Figur 1 erkennbar ist, mit unteren Laufrollen 3 und Anschlussmitteln in Form von Schienenabschnitten 4 zur lösbaren Anbringung eines in Figur 1 links gezeichneten Aufnahmebügels 5 versehen, der zum Auf- und Abladen des Moduls 1 auf das Transportfahrzeug 2 mit einem in Figur 3 angedeuteten, dort fahrzeuginternen Hebezeug 6 in Wirkverbindung bringbar ist.

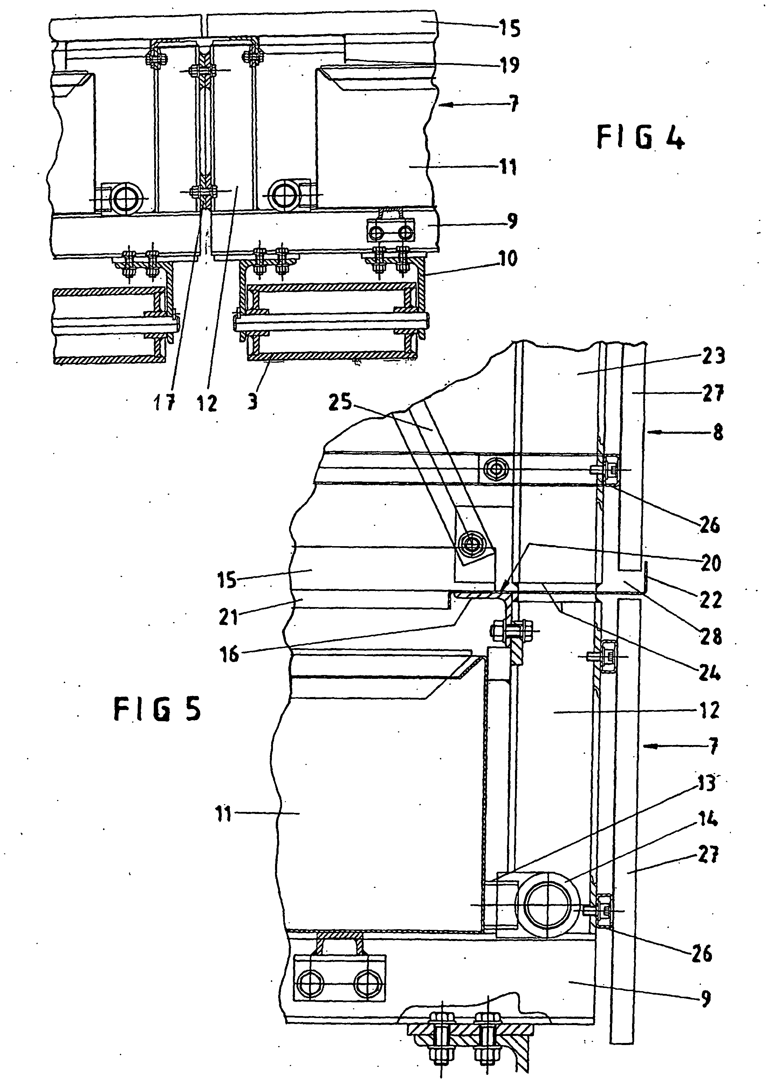

Die Moduln 1 enthalten jeweils, wie die Figuren 1 und 2 erkennen lassen, ein Untergestell 7 und eine hierauf aufgenommene Aufbauanordnung 8. Die Aufbauanordnungen 8 sind im Bereich der einander zugewandten Seiten offen, so dass sich ein geräumiger Kabineninnenraum ergibt. Das Untergestell 7 enthält, wie die Figuren 4 und 5 zeigen, einen Grundrahmen 9, an dem den Laufrollen 3 zugeordnete Lagerböcke 10 sowie die oben erwähnten, die dem Aufnahmebügel 5 zugeordneten Anschlussmittel bildenden Schienen 4 angebracht sind. Die Laufrollen 3 befinden sich, wie am besten aus Figur 2 erkennbar ist, im Bereich des hinteren Modulendes. Die Anschlussmittel 4 befinden sich im Bereich des vorderen Modulendes. Der Aufnahmebügel 5 ist, wie oben schon erwähnt wurde, zweckmäßig abnehmbar, so dass er in der der Figur 2 zugrundeliegenden Aufbaustellung nicht stört. Zweckmäßig kann der Aufnahmebügel 5 mit den zugeordneten Aufnahmemitteln durch lösbare Bolzen verbindbar sein.

Der Grundrahmen 9 kann als Gitterrahmen ausgebildet sein, der mit einer umlaufenden Begrenzung versehen ist. Auf dem Grundrahmen 9 jedes Moduls 1 ist eine Wanne 11 aufgenommen, die zur Aufnahme von Flüssigkeiten, wie Öl, Wasser, Chemikalien etc., geeignet ist. Die Wanne - 11 ist von im Bereich des äußeren Rands des Grundrahmens 9 angeordneten, vertikal nach oben abstehenden Tragstutzen 12 mit geringem Abstand umfasst ist. Die Tragstutzen 12 bilden praktisch eine umlaufende, vom Grundrahmen 9 nach oben abstehende Stützeinrichtung zur Aufnahme der jeweils zugeordneten Aufbauanordnung 8. Die Höhe der durch die Tragstutzen 12 gebildeten Stützeinrichtung ist etwas größer als die Höhe der zugeordneten Wanne 11.

Die Wannen 11 sind, wie die Figuren 4 und 5 weiter erkennen lassen, mit im Bereich ihrer Seitenflanken angeordneten Anschlussstutzen 13 zum Anschluss von Ver- und Entsorgungsleitungen 14 versehen. Im Falle einer Dichtprüfkabine wird in den Wannen 11 ein Wasservorrat aufgenommen, der mittels einer zugeordneten Pumpeinrichtung im Kabineninnenraum angeordneten Sprühdüsen etc. zugeführt wird. Die von Anfang an vorgesehenen Anschlussstutzen 13 erleichtern die Installation der benötigten Ver- und Entsorgungsleitungen 14.

Jedes Untergestell 7 enthält, wie die Figuren 4 und 5 weiter zeigen, einen die zugeordnete Wanne 11 überspannenden Laufboden 15, der rostartig ausgebildet und dementsprechend flüssigkeitsdurchlässig ist. Zweckmäßig kann der Laufboden 15 hierzu einfach als Gitterboden ausgebildet sein. Der Laufboden 15 ist auf den Tragstutzen 12 aufgenommen. Hierzu können an den im Bereich jeder Modulseite hintereinander angeordneten Tragstutzen 11 dem Laufboden 15 zugeordnete Auflageschienen 16 angebracht sein. An den Tragstutzen 12 der einander zugewandten Modulseiten sind, wie aus Figur 4 ersichtlich ist, seitliche Längsleisten 17 angebracht, die zur Verbindung der einander benachbarten Grundgestelle 7 miteinander verschraubt sind.

Der auf den Tragstutzen 12 aufgenommene Laufboden 15 besitzt einen praktisch der Höhe des zugeordneten Untergestells 7 entsprechenden Bodenabstand. Um diesen Abstand zu überwinden, können am Ein- und Ausgang der Kabine Stufen vorgesehen sein, die vom Niveau der Aufstellungsebene auf das erhöhte Niveau des Laufboden 15 hinaufführen. Im dargestellten Beispiel sind hierzu, wie aus Figur 2 ersichtlich ist, abnehmbare Auf- und Abfahrrampen 18 vorgesehen. Diese können mit einem hier nicht näher dargestellten Geländer versehen sein. Die Auf- und Abfahrrampen 18 sind mit ihrem oberen Ende am Untergestell 7 abgestützt. Zweckmäßig liegen die Auf- und Abfahrrampen 18 hierzu mit geeigneten Stützklauen auf den zugewandten Tragstutzen 12 oder auf dem auf den Tragstutzen 12 aufgenommenen Laufboden 15 auf.

Der Abstand zwischen den beiden Wannen 11 der nebeneinander angeordneten Moduln 1 ist durch eine unter den Laufboden 15 eingelegte, mittlere Abdeckung 19 überbrückt. Diese liegt einfach auf den an den einander zugewandten Tragstutzen 12 der beiden Moduln 1 angebrachten Auflageschienen 16 auf und wird zusammen mit dem Tragboden 15 gesichert. Die den gegenseitigen Wannenabstand überbrückende Abdeckung 19 ist hier als an den die beiden Wannen 11 übergreifenden Längsrändern mit nach unten abgewinkelten Tropfleisten versehenes Draingeblech ausgebildet. Aufgrund der durch die Abdeckung 19 gebildeten Überdachung des Abstands der beiden Wannen 11 ist sichergestellt, dass in diesem Bereich anfallende Flüssigkeit zuverlässig in eine der Wannen 11 gelangt.

Außerhalb der mittleren Abdeckung 19 ist, wie Figur 5 erkennen lässt, eine den Abstand der Wanne 11 von den benachbarten Kabinenaußenwände überbrückende, c-förmig umlaufende, das heißt entlang der drei Außenseiten des zugeordneten Moduls 1 umlaufende Abdeckung 20 vorgesehen. Auch diese liegt auf den dem Laufboden 15 zugeordneten Auflageschienen 16 auf. Die randseitige Abdeckung 20 ist als im Querschnitt z-förmig gekantetes Drainigeblech ausgebildet, dessen innerer, die zugeordnete Wanne 11 übergreifender Randbereich eine nach unten gerichtete Tropfleiste 21 aufweist. Der gegenüberliegende Randbereich der Abdeckung 19 ist als nach oben gerichtete Fangleiste 22 ausgebildet, die sich im dargestellten Beispiel im Bereich der Kabinenaußenseite befindet.

Die auf dem Untergestell 7 aufnehmbare Aufbauanordnung 8 enthält, wie aus Figur 5 ersichtlich ist, im Abstand der vertikalen Tragstutzen 12 des Untergestells 7 angeordnete, vertikale Standholme 23. Die Tragstutzen 12 und die Standholme 23 sind an den einander zugewandten Stirnseiten mit Flanschplatten 24 versehen, die unter Zwischenschaltung des die randseitige Abdeckung 20 bildenden Drainageblechs, das eine äußere Fangleiste 22 aufweist, aufeinander abgestützt und aneinander festgelegt sind. Die Tragstutzen 12 und die hiermit fluchtenden Standholme 23 bilden praktisch über die ganze Höhe der zugeordneten Seitenwand durchgehende vertikale Säulen. Zur Erzielung einer hohen Seitenstabilität können die Felder zwischen einander benachbarten Standholmen 23 durch Diagonalstreben 25 versteift sein, wie aus Figuren 3 und 5 erkennbar ist. Dabei genügt es, wenn jeweils lediglich die äußeren Felder, wie in Figur 3, mit Diagonalstreben 25 versehen sind.

Die nebeneinander angeordneten Tragstutzen 12 und Standholme 23 sind, wie Figur 5 weiter zeigt, durch Querstreben 26 verbunden, an denen die Kabinenaußenhaut 27 befestigt ist. Diese ist im Bereich der Stoßstelle zwischen Tragstutzen 12 und Standholmen 23 mit einem Spalt 28 versehen, durch den das die randseitie Abdeckung 20 bildende Drainageblech hindurchgreift, das dementsprechend den der Aufbauanordnung zugeordneten Bereich der Außenhaut 27 untergreift. Sowohl an deren Innenseite als auch an deren Außenseite ablaufende Feuchtigkeit wird dementsprechend aufgefangen und in die zugeordnete Wanne 11 abgeleitet. Ebenso könnte über den genannten Spalt 28, sofern erwünscht, eine Belüftung des Kabineninnenraums bewerkstelligt werden.

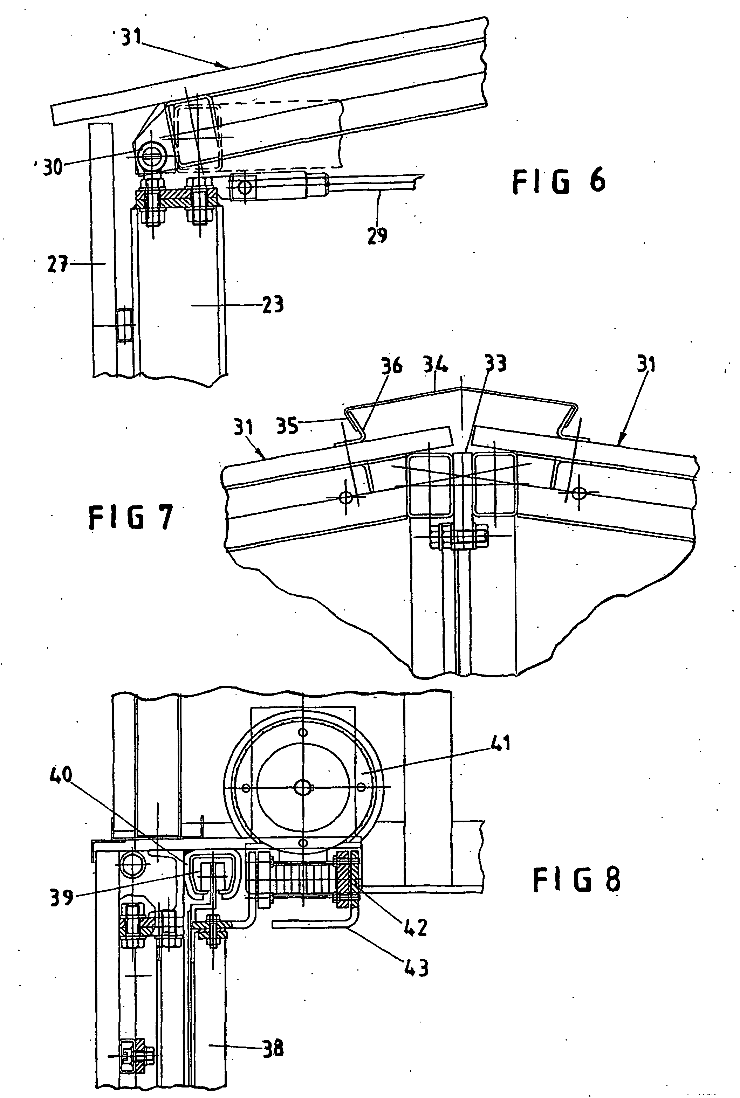

Die Seitenwände der Aufbauanordnungen 8 der einander zugeordneten Moduln 1 sind, wie aus Figur 6 erkennbar ist, durch an ihrem oberen Rand angreifende, über die Kabinenbreite durchgehende Zuganker 29 miteinander verspannt. Die Zuganker 29 verhindern, dass die Seitenwände durch nach außen gerichtete Biegekräfte beansprucht werden.

Zur Bildung des Kabinendachs ist am oberen Rand der Längsseite jeder Aufbauanordnung 7, wie Figur 6 weiter erkennen lässt, ein durch Schwenklageranordnungen 30 schwenkbar gelagerter Dachflügel 31 vorgesehen. Die Schwenklageranordnungen 30 sind am oberen Ende zugeordneter Standholme 23 angebracht. Pro Dachflügel 31 genügen zwei Schwenklageranordnungen 30. Der Dachflügel 31 ist von der in Figur 6 mit unterbrochenen Linien angedeuteten, etwa horizontalen Transportstellung in die mit durchgezogenen Linien gezeichnete Aufbaustellung hochschwenkbar und umgekehrt. Auf diese Weise lässt sich eine geringe Transporthöhe erreichen. Im Aufbauzustand ergibt sich dennoch eine vergleichsweise große lichte Kabinenhöhe. Zur Sicherung der Dachflügel 31 in der Transportstellung können, wie aus Figur 3 entnehmbar ist, den der Schwenklagerung gegenüberliegenden Flügelrand gegenüber dem Untergestell 7 abstützende Stützstangen 32 vorgesehen sein.

Die in die Aufbaustellung hochgeschwenkten Dachflügel 31 einander benachbarter Moduln 1 können an ihrem oberen Rand einfach aneinander abgestütz sein. Im dargestellten Beispiel sind die einander benachbarten Dachflügel 31, wie aus Figur 7 ersichtlich ist, am oberen Rand mittels einer Flanschverbindung 33 aneinander befestigt. Im Bereich der Kabinenstirnseiten sind, wie den Figuren 1 und 7 entnehmbar ist, die Dachflügel 31 untergreifende Giebelelemente 34 vorgesehen.

Die obere Fuge zwischen den einander benachbarten Dachflügeln 31 und dementsprechend die obere Fuge zwischen den einander benachbarten Aufbauanordnungen 8 ist, wie Figur 7 weiter zeigt, durch ein Firstblech 34 überspannt. Dieses ist mit nach unten abgewinkelten Randklauen 35 versehen und mit diesen auf an den Dachflügeln 31 angebrachte Führungsleisten 36 aufschiebbar. Dies ergibt einen zuverlässigen Halt sowie eine einfache Anbringung.

Im Bereich der den Kabinenstirnseiten zugeordneten Flanken der Moduln 1 sind, wie aus Figur 1 ersichtlich ist, einander zugewandte Toröffnungen 37 vorgesehen, denen verschiebbare Torblätter 38 zugeordnet sind. Diese sind, wie aus Figur 8 entnehmbar ist, über im Bereich ihres oberen Rands vorgesehene Laufrollen 39 in am oberen Rand der Toröffnungen 37 vorgesehenen Führungsschienen 40 verschiebbar gelagert. In einfachen Fällen können die Torblätter 38 einfach manuell verschoben werden. Im dargestellten Beispiel sind die Torblätter 38 mittels eines Motors 41 antreibbar. Hierzu ist ein mittels des Motors 41 antreibbares, über beide Toröffnungen 37 sich erstreckendes Umlaufelement 42 in Form eines Riemens oder einer Kette etc. vorgesehen, an dem den Torflügeln 38 zugeordnete Mitnehmer 43 befestigt sind. Jedes Trum des Umlauforgans 42 ist dabei einem anderen Torflügel 38 zugeordnet, so dass die beiden Torflügel 38 automatisch gegenläufig betätigt werden.

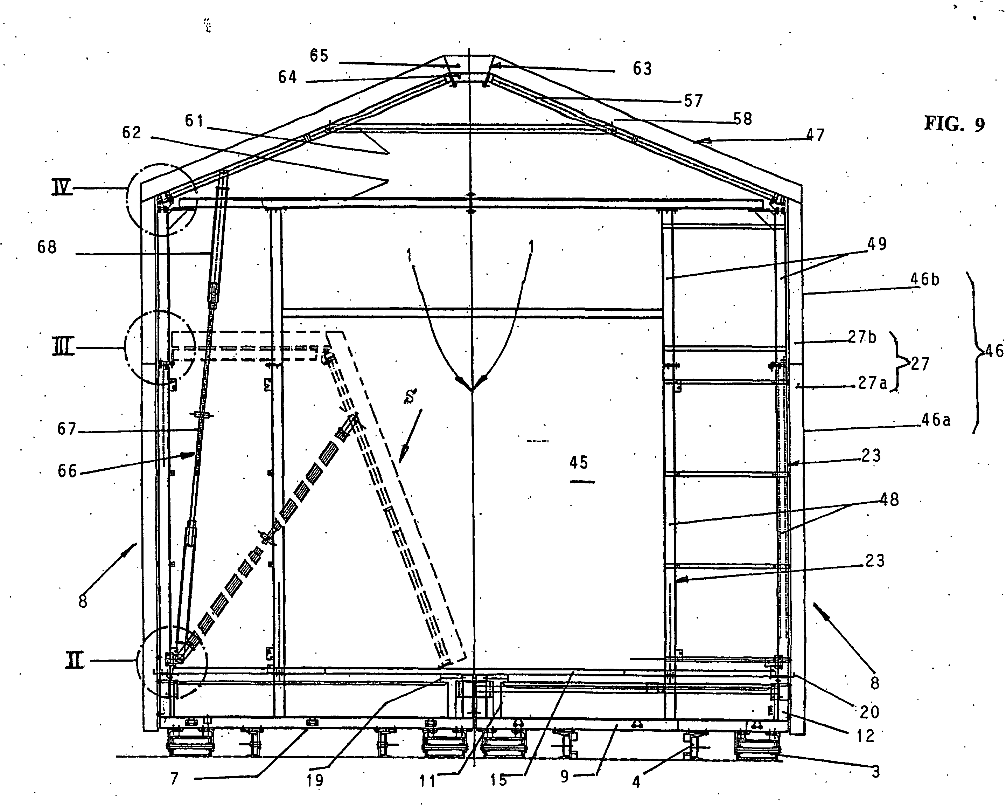

Der grundsätzliche Aufbau der den Figuren 9 - 12 zugrundeliegenden mobilen Kabine stimmt mit der oben geschilderten Ausführung überein. Nachstehend werden daher in erster Linie die Unterschiede dargelegt, wobei für gleiche Teile dieselben Bezugszeichen Verwendung finden.

Die in Figur 9 dargestellte mobile Kabine besteht, wie die mobile Kabine gemäß Figuren 1 - 8, aus zwei zu der eine Symmetrieebene bildenden Mittellängsebene symmetrischen Moduln 1, die entlang der Symmetrielinie zusammenstoßen. Die Moduln 1 sind wie oben jeweils nach Art eines Abrollcontainers, der straßentaugliche Abmessungen aufweist und auf einem Straßenfahrzeug aufnehmbar ist, ausgebildet. Zur Schaffung eines Innenraums mit über die Moudllänge hinausgehender Länge können selbstverständlich mehrere auch bei dieser Ausführung Einheiten vorstehnd umrissener Art hintereinander angeordnet sein.

Die Moduln 1 enthalten wie oben jeweils ein Untergestell 7 und eine hierauf aufgenommene Aufbauanordnung 8. Das Untergestell 7 enthält einen Grundrahmen 9, auf dem eine Wanne 11 aufgenommen ist. Der Grundrahmen 9 ist zweckmäßig als Gitterrahmen ausgebildet, der mit umlaufend aneinander angesetzten Außenschenkeln versehen ist, auf die die nach oben abstehenden, mit gleichem Seitenabstand angeordneten Tragstutzen 12 aufgesetzt, die eine die Wannen umfassende Stützeinrichtung zur Aufnahme der Aufbauanordnung 8 bilden. An den Tragstutzen 12 der einander zugewandten Modulseiten sind Längsleisten angebracht, die zur Verbindung der Untergestelle 7 der beiden Moduln 1 miteinander verschraubbar sind.

Der Abstand zwischen den einander benachbarten Wannen 11 ist durch ein auf den einander zugewandten Tragstutzen 12 der beiden Moduln 1 aufliegendes, den Rand der Wannen 11 übergreifendes Abdeckblech 19 überbrückt. Eine ähnliche Anordnung könnte vorgesehen, sein wenn mehrere Moduln mit hintereinander angeordneten Wannen hintereinander angeordnet sind. Der Spalt zwischen den Kabinenaußenseiten und dem zugeordneten Wannenrand wird durch Abdeckbleche 20 übergriffen.

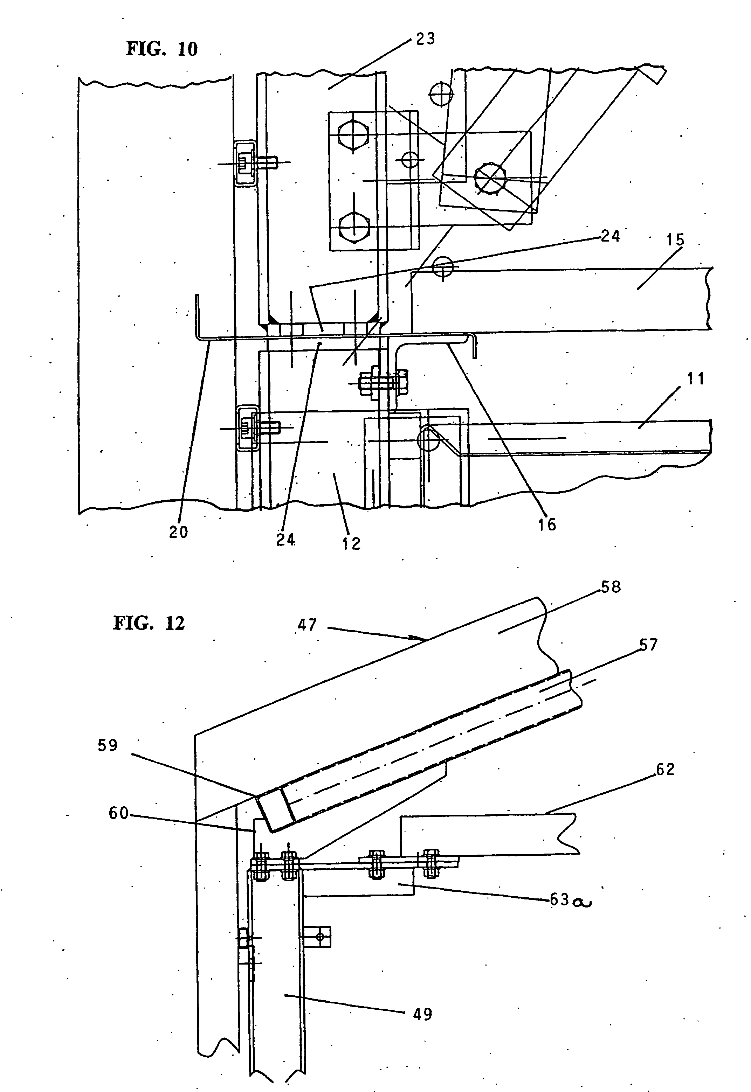

Das Untergestell 7 besitzt einen die jeweils zugeordnete Wanne 11 überspannenden Laufboden 15, der zumindest teilweise rostartig ausgebildet und dementsprechend durchlässig für Flüssigkeiten ist. Der Laufboden 15 ist auf den die Wanne 11 leicht überragenden Tragstutzen 12 aufgenommen. Hierzu sind an den Tragstutzen 12, wie aus Figur 10 ersichtlich ist, Auflageschienen 16 angebracht, auf denen der Laufboden 15 aufliegt.

Die Aufbauanordnung 8 umfasst den Ein- bzw. Ausgang der Kabine enthaltende , als ganzes mit 45 bezeichnete Stirnwände sowie eine der Kabinenlängsseite zugeordnete, als ganzes mit 46 bezeichnete Seitenwand 46 und eine hieran anschließende, schräg nach oben verlaufende, als ganzes mit 47 bezeichnete Dachhälfte. Die Stirnwände 45 und Seitenwand 46 enthalten wie oben jeweils im Abstand der Tragstutzen 12 des Untergestells 7 angeordnete, vertikale Standholme 23, die mit ihren unteren Enden auf die oberen Enden der zugeordneten Tragstutzen 12 aufgesetzt und hieran befestigt sind.

Die Standholme 23 sind über der Höhe in einen längeren, unteren Abschnitt 48 und einen kürzeren, oberen Abschnitt 49 unterteilt. An den Standholmen 23 ist eine Außenhaut 27 angebracht die auf der Höhe der Unterteilung der Standholme 23 ebenfalls in zwei Abschnitte 27a, b unterteilt ist, so dass sich insgesamt jeweils ein unterer und ein oberer Wandabschnitt 46a bzw. 46b ergeben. Der an den unteren Abschnitten 48 der Standholme 23 angebrachte Abschnitt 27a der Außenhaut erstreckt sich, wie aus Figur 9 erkennbar ist, ununterteilt auch über das Untergestell 7.

Die Abschnitte 48, 49 der stirnwandseitigen Standholme 23 sind aneinander angeflanscht. Hierzu kann eine ähnliche Flanschverbindung Verwendung finden, wie zur Verbindung der Standholme 23 mit den zugeordneten Tragstutzen 12. Die Abschnitte 48, 49 der seitenwandseitigen Standholme 23 sind gelenkig miteinander verbunden. Auf diese Weise ist es möglich, den oberen Seitenwandabschnitt samt hieran angebrachter Dachhälfte 47 als schwenkbare Einheit 'S' von der in Figur 9 mit durchgezogenen Linien gezeichneten, aufgerichteten Stellung in die in Figur 9 links mit unterbrochenen Linien angedeutete Transportstellung umzulegen und umgekehrt.

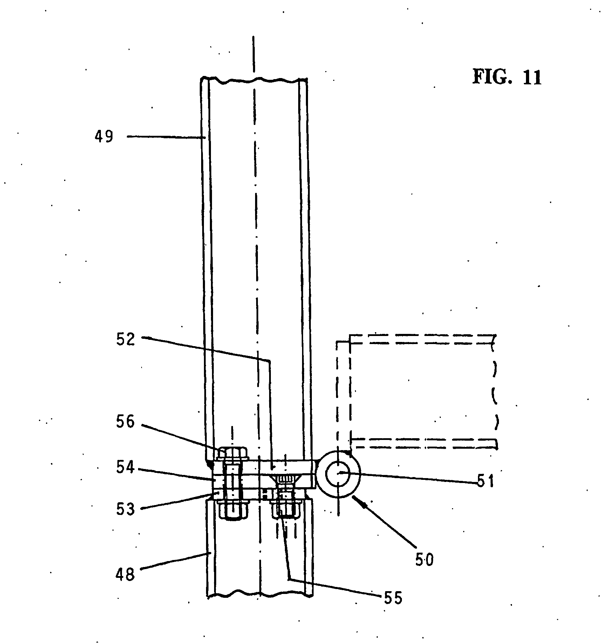

Die Gelenkverbindung ist, wie aus Figur 11 erkennbar ist, als Scharniergelenk 50 ausgebildet, dessen Achse 51 im Bereich der zur Kabineninnenseite weisenden Standholmseite angeordnet ist, so dass sich der umgelegte, obere Wandabschnitt 46b mit hieran angebrachter Dachhälfte 47 über dem Grundgestell 7 befinden. Das Scharniergelenk 50 besitzt zwei Flügel, wobei der obere Flügel 52 als Flanschplatte am unteren Ende des jeweils zugeordneten oberen Holmabschnitts 49 angebracht ist. Der untere Holmabschnitt 49 ist mit einer Flanschplatte 53 versehen, an dem der untere Scharnierflügel 54 durch Senkschrauben 55 festgelegt ist. Auf diese Weise ist es möglich, das Scharniergelenk 50 zunächst am oberen Holmabschnitt 49 fest anzubringen und beim Zusammenbau mit dem unterem Holmabschnitt 48 zu verschrauben. In der aufgerichteten Stellung wird das Scharniergelenk 50 durch die Scharnierflügel 52, 54 und die Flanschplatte 53 durchgreifende Schrauben 56 blockiert. Diese werden im aufgerichteten Zustand eingesetzt und werden zum Umlegen des umlegbaren Wand- und Dachbereichs entfernt.

Die Dachhälfte 47 jedes Moduls 1 ist am oberen Ende des zugeordneten, oberen Seitenwandabschnitts 46b starr angebracht. Die Dachhälfte 47 besteht aus im Abstand der Standholme 23 angeordneten Trägern 57, auf denen die Dachhaut 58 aufgenommen ist. Die Träger 57 sind, wie Figur 12 erkennen lässt, im Bereich ihres unteren Endes an einem über die ganze Modullänge durchgehenden Längsträger 59 befestigt, der über Knotenbleche 60 mit den oberen Enden der oberen Abschnitte 49 der seitenwandseitigen Standholme 23 fest verbunden ist. Die einander gegenüberliegenden Träger 57 der einander zugewandten Dachhälften 47 können durch nachträglich einsetzbare, aus Figur 9 ersichtliche Zuganker 61 miteinander verbunden sein.

Die oberen Enden der stirnwandseitigen Standholme 23 sind durch einen im Bereich der Modulteilfuge unterteilten Querbalken 62 überbrückt, dessen Enden auf im Bereich der oberen Enden der koplanar hierzu vorgesehenen, seitenwandseitigen Standholme 23 angebrachten Konsolen 63a aufliegen.

Die einander zugewandten oberen Enden der einander gegenüberliegenden Dachhälften 47 schließen nicht direkt aneinander an und sind dementsprechend durch ein Brückenstück 63 überbrückt.

Dieses besteht aus im Abstand der Dachträger 57 angeordneten, hieran lösbar anflanschbaren Brückenträgern 64, auf denen eine den Dachfirst bildende Dachhautanordnung 65 aufgenommen ist. Die Seitenflanken des Brückenstücks 63 sind v-förmig gegeneinander geneigt, so dass das Brückenstück 63 einfach von oben einsetzbar bzw. nach oben ausbaubar ist. Das Brückenstück 63 wird beim Aufstellen der erfindungsgemäßen Kabine nachträglich eingesetzt. Die aus jeweils oberem Wandabschnitt und hieran befestigter Dachhälfte bestehenden Schwenkeinheiten 'S' der in Figur 9 mit unterbrochenen Linien angedeuteten Art können daher bei bereits seitlich zusammengerückten und im Bereich der Grundgestelle 7 miteinander verbundenen Moduln aneinander vorbeigeschwenkt werden. Es ist daher möglich, den Hochschwenkvorgang erst auszuführen, nachdem die Moduln im Bereich der Grundgestelle 7 bereits miteinander verschraubt sind, wodurch jede Art von Kippgefahr ausgeschlossen wird.

Der Schwenkwinkel der genannten Schwenkeinheit 'S' beträgt hier, wie aus Figur 9 ersichtlich ist, 90°. In der umgelegten Stellung erstreckt sich der obere Wandabschnitt 46b dementsprechend parallel zum Boden des Untergestells 7. Die am oberen Wandabschnitt 46b befestigte Dachhälfte 47 verläuft schräg nach unten und liegt mit ihrem unteren Ende auf dem Boden des Untergestells 7 auf. Es ergibt sich somit praktisch eine im Querschnitt in etwa trapezförmige Konfiguration. Um dies zu gewährleisten, ist die Summe aus der Höhe eines oberen Abschnitt 46b und der über diesen hinausgehenden Höhe der zugeordneten Dachhälfte 47 höchstens gleich der Breite des Untergestells 7. Die Höhe der unteren Abschnitte 46a wird so gewählt, dass die maximal zulässige Transporthöhe nicht überschritten wird. Im dargestellten Beispiel entspricht die Höhe der unteren Abschnitte 46a der senkrechten Projektion der Dachhälfte 47 ohne Brückenstück 63.

Einige der Dach-Träger 57 können, wie aus Figur 9 links ersichtlich ist, durch eine verlängerbare Strebe 66 mit dem unteren Endbereich des jeweils zugeordneten Standholms 23 verbunden sein. In der Regel genügt es, wenn im Bereich des vorderen und hinteren Modulendes jeweils eine derartige Strebe 66 vorgesehen ist. Diese enthält im dargestellten Beispiel eine mittlere Stange 67 etwa in der Form einer Gewindestange, die beidseitig mit Rohrstücken 68 etwa in der Form von Gewindehülsen im Eingriff und in jeder Position hieran fixierbar ist, die an den unteren, stationären Abschnitt 48 des zugeordneten Standholms 23 und den zugeordneten Dach-Träger 57 angelenkt sind. Zum Absenken der schwenkbaren Einheit in die Transportstellung wird die Strebe 66 verkürzt. In der Transportstellung bewirkt die Strebe 67 eine zuverlässige Sicherung der abgesenkten Schwenkeinheit 'S' gegen unerwünschtes Klappern. Die hier vorgesehene Gewindestange ist mit einem Betätigungsorgan (69) versehen. Dabei kann es sich um einen fest angebrachten Ring handeln, an dem geeignete Griffelemente sternförmig anbringbar sind.

## Patentansprüche

1. Mobile Kabine, insbesondere mobile Nasskabine, wie KFZ-Waschkabine, KFZ-Dichtprüfkabine etc., die aus wenigstens zwei paarweise nebeneinander angeordneten, nach Art von Abrollcontainern mit straßentauglichen Abmessungen aufgebauten Moduln (1) besteht, **dadurch gekennzeichnet, dass** die Module jeweils ein Untergestell (7) sowie eine auf diesem aufnehmbare Aufbauanordnung (8) aufweisen, wobei die Untergestelle (7), die im Bereich ihrer einander zugewandten Flanken miteinander verbindbar sind, jeweils einen Grundrahmen (9) mit Container-Bewegungsmitteln aufweisen und wobei die Aufbauanordnungen (8), die zumindest jeweils eine Seitenwand (46) und eine Dachhälfte (47) aufweisen, im Bereich der einander zugewandten Seiten offen und im Bereich der Fuge zwischen den einander zugewandten Dachhälften (47) durch eine Überbrückungseinrichtung (34;63) überbrückbar sind.

2. Mobile Kabine nach Anspruch 1, **dadurch gekennzeichnet, dass** jedes Untergestell (7) zur Bildung der Container-Bewegungsmittel mit am Grundrahmen (9) angebrachten Laufrollen (3) versehen und Anschlussmitteln (4) für wenigstens einen abnehmbaren Aufnahmebügel (5) versehen ist.

3. Mobile Kabine nach einem der vorhergehenden Ansprüche, **dadurch gekennzeichnet, dass** jedes Untergestell (7) eine von seinem Grundrahmen (9) nach oben abstehende, umfangsseitige Stützeinrichtung und wenigstens eine in den von der Stützeinrichtung umfassten Raum einsetzbare, vorzugsweise mit Anschlussstzten (13) für Ver- und/oder Entsorgungsleitungen (14) versehene Wanne (11) sowie einen diese überspannenden, durch die umlaufende Stützeinrichtung abgestützten, rostartigen Laufboden (15) aufweist, unter welchem eine den Abstand der beiderseitigen Wannen (11) überbrückende, mittlere Abdeckung (19) vorgesehen ist.

4. Mobile Kabine nach Anspruch 3 **dadurch gekennzeichnet, dass** jedes Untergestell (7) mit einer den Randabstand der Wanne (11) von den benachbarten Kabinenwänden überbrückenden, randseitigen Abdeckung (20) versehen ist und dass die mittlere Abdeckung (19) und die randseitigen Abdeckungen (20) vorzugsweise als an der Stützeinrichtung angebrachte Drainagebleche ausgebildet sind.

5. Mobile Kabine nach einem der Ansprüche 3 oder 4, **dadurch gekennzeichnet, dass** die Stützeinrichtung durch voneinander beabstandete, am Grundrahmen (9) angebrachte, vertikale Tragstutzen (12) gebildet wird und dass die Aufbauanordnung (8) im Abstand der Tragstutzen (12) angeordnete, vertikale Standholme (23) aufweist, die mit den hiermit fluchtenden Tragstutzen (12) verbunden, vorzugsweise unter Zwischenschaltung des die randseitige Abdeckung (20) bildenden Drainageblechs an den jeweils zugeordneten Tragstutzen angeflanscht sind und dass an den Standholmen (23) und Tragstutzen (12) eine KabinenAußenhaut (27) anbringbar ist, die vorzugsweise einen vom die randseitige Abdeckung (20) bildenden Drainageblech durchgriffenen Spalt (28) aufweist.

6. Mobile Kabine nach einem der vorhergehenden Ansprüche, **dadurch gekennzeichnet, dass** die Aufbauanordnungen (8) stirnseitig mit aneinander anschließenden Toröffnungen (37) versehen sind, denen vorzugsweise gegenläufig bewegbare Torblätter (38) zugeordnet sind und dass im Bereich der Toröffnungen (37) am Untergestell (7) ansetzbare Auf- und/oder Abfahrrampen (18) vorgesehen sind.

7. Mobile Kabine nach einem der vorhergehenden Ansprüche, **dadurch gekennzeichnet, dass** jede Aufbauanordnung (8) mit einem durch vorzugsweise im Bereich der oberen Enden zugeordneter Standholme (23) angeordnete Schwenklager (30) schwenkbar auf einer Seitenwand aufgenommenen Dachflügel (31) versehen ist, der in einer schräg geneigten Position mit seinem oberen Rand am Dachflügel (31) der Aufbauanordnung (8) des benachbarten Moduls (1) festlegbar und in der in eine etwa horizontale Position abgekippten Transportstellung durch mindestens eine Distanzstrebe (32) am Untergestell (7) abstützbar ist, wobei wenistens ein die Aufbauanordnungen (8) der einander benachbarten Moduln (1) an ihrem oberen Rand miteinander verspannender Zuganker (29) vorgesehen ist und die obere Fugenabdeckung (34) als die Fuge zwischen den aneinander festlegbaren Dachflügeln (31) überbrückendes, vorzugsweise auf dachflügelseitige Führungen (36) aufschiebbares Firstblech ausgebildet ist.

8. Mobile Kabine nach einem der vorhergehenden Ansprüche, **dadurch gekennzeichnet, dass** im Bereich der Kabinenstirnseiten oberhalb der Standholme anbringbare Giebelelemente (34) vorgesehen sind.

9. Mobile Kabine nach einem der vorhergehenden Ansprüche, **dadurch gekennzeichnet, dass** die Seitenwand (46) jeder Aufbauanordnung (8) einen unteren, am Untergestell (7) stationär fixierbaren Abschnitt (46a) und einen gelenkig hiermit verbundenen, oberen Abschnitt (46b) aufweist, an dem die zugeordnete Hälfte (47) starr angebracht ist.

10. Mobile Kabine nach Anspruch 9, **dadurch gekennzeichnet, dass** die vertikalen Standholme (23) der Seitenwand (46) jeder Aufbauanordnung (8) jeweils zwei aneinander anschließende Abschnitte (48, 49) enthalten, die an den einander zugewandten Enden mittels einer Gelenkanordnung (50) schwenkbar miteinander verbunden und durch lösbare Befestigungsmittel (56) lösbar aneinander festlegbar sind, wobei die Abschnitte (48, 49) der Standholme (23) an den einander zugewandten Enden vorzugsweise mit Flanschen (52, 53) versehen sind, die über die im Bereich ihres der Kabineninnenseite zugewandten Rands angeordnete, einen Schwenkwinkel von mindestens 90° aufweisende Gelenkanordnung (50) zusammenhängen und durch sie durchgreifende Schrauben (56) lösbar aneinander festlegbar sind.

11. Mobile Kabine nach einem der vorhergehenden Ansprüche, **dadurch gekennzeichnet, dass** die Summe aus der Höhe des oberen Wandabschnitts (46b) und der über diesen hinausgehenden Höhe der zugeordneten Dachhälfte (47) höchstens der Breite des Untergestells (7) entspricht und dass die vertikale Projektion der Dachhälfte (47) höchstens der Höhe des unteren Wandabschnitts (46a) entspricht.

12. Mobile Kabine nach einem der vorhergehenden Ansprüche, **dadurch gekennzeichnet, dass** die Dachhälfte (47) einen unteren Längsträger (59) aufweist, der über Knotenbleche (60) fest mit dem oberen Ende der oberen Abschnitte (49) der seitenwandseitigen Standholme (23) verbunden ist.

13. Mobile Kabine nach einem der vorhergehenden Ansprüche, **dadurch gekennzeichnet, dass** die einander zugewandten oberen Enden der Dachhälften (47) der beiden Moduln (1) unter Zwischenschaltung eines Brückenstücks (63) aneinander festlegbar sind, das v-förmig gegeneinander geneigte Seitenflanken aufweist.

14. Mobile Kabine nach einem der vorhergehenden Ansprüche, **dadurch gekennzeichnet, dass** zumindest ein Teil der Träger (57) der Dachhälfte (47) mit dem unteren Abschnitt des jeweils zugeordneten, seitenwandseitigen Standholms (23) mittels einer an ihren Enden angelenkten, verlängerbaren Strebe (66) verbunden ist, die vorzugsweise eine mittlere Gewindestange (67) aufweist, die beidseitig mit am unteren Standholmabschnitt (48) bzw. am dachseitigen Träger (57) angelenkten Gewindebüchsen (68) im Eingriff ist.

15. Mobile Kabine nach einem der vorhergehenden Ansprüche, **dadurch gekennzeichnet, dass** die Aufbauanordnungen (8) der einander benachbarten Moduln (1) durch an den dachseitigen Trägern (57) lösbar anbringbare Querholme (61) verspannbar sind und dass auf den oberen Enden der außerhalb der Seitenwand vorgesehenen Standholme (23) ein mittig unterteilter Querträger (62) aufliegt, der mit seinen Enden an am oberen Ende der hierzu koplanaren, seitenwandseitigen Standholme (23) angebrachten Konsolen (63a) aufliegt.

16. Mobile Kabine nach einem der vorhergehenden Ansprüche 8-15, **dadurch gekennzeichnet**, die außerhalb der Seitenwand (46) vorgesehenen Standholme (23) ebenfalls in zwei Abschnitte (48, 49) unterteilt sind, die an den einander zugewandten Enden aneinander angeflanscht sind.

## Claims

1. A mobile cabin, in particular a mobile wet cabin, such as a car wash cabin, a car leak test cabin, etc., which comprises at least two modules (1) arranged in pairs side by side, which in the manner of roller containers have dimensions suitable for road transport, **characterised in that** each of such modules comprises a subframe (7) as well as a top structure (8) which can be mounted on such subframe (7), with each of the subframes (7) connectable with each other in the region of their flanks facing each other comprising a base frame (9) with container moving means, and with each of such top structures (8) comprising at least a lateral wall (46) and a roof half (47), being open in the region of the mutually facing sides and bridgeable in the region of the joint between the facing roof halves (47) by a bridging device (34; 63).

2. A mobile cabin according to Claim 1, **characterised in that** each subframe (7) is provided with casters (3) mounted on the base frame (9) for forming the container moving means and further with connecting means (4) for at least one detachable lifting rack (5).

3. A mobile cabin according to any of the preceding Claims, **characterised in that** each subframe (7) comprises a peripheral support framework extending from its base frame (9) towards the top, and at least one bottom trough (11) which can be placed into the interior encompassed by the support framework and which is advantageously provided with connecting pieces (13) for supply/discharge lines (14), and further comprises a gridlike running surface (15) bridging the bottom trough and supported by the peripheral support framework, below which provision is made for a midway cover member (19) bridging the gap between the two bottom troughs (11).

4. A mobile cabin according to Claim 3, **characterised in that** each subframe (7) is provided with a rim-side cover (20) which bridges the space between the bottom trough (11) and the adjacent cabin walls and that the midway cover (19) and the rim-side covers (20) are designed as drainage plates preferably mounted on the support framework.

5. A mobile cabin according to any of the Claims 3 or 4, **characterised in that** the support framework is formed by mutually spaced, vertical support members (12) mounted on the base frame (9), and that the top structure (8) is provided with vertical struts (23) spaced at the same distance as the support members (12), which struts (23) are bolted to the support members (12) and are flush therewith, preferably bolted to each of the associated support members, preferably with a drainage plate forming the associated rim-side cover (20) being interposed, and further that an outer skin of the cabin (27) can be attached to the struts (23) and the support members (12), which outer skin of the cabin (27) preferably comprises a gap (28) through which the drainage plate forming the rim-side cover (20) extends.

6. A mobile cabin according to any of the preceding Claims, **characterised in that** the end walls of the top structures (8) are provided with door openings (37) adjacent to each other which are associated with door leaves (38) preferably movable in opposite directions and further that access ramps (18) can be joined to the subframe (7) in the region of the door openings (37).

7. A mobile cabin according to any of the preceding Claims, **characterised in that** each top structure (8) is provided with a roof wing (31) which is swivel-mounted on a lateral wall by swivel bearings (30) preferably arranged in the area of the upper ends of associated struts (23), which roof wing (31) in an angularly inclined position is with its upper rim attachable to the roof wing (31) of the top structure (8) of the adjacent opposite module (1) and which in an approximately horizontal fold-down transport position is supportable against the subframe (7) by at least one support strut (32), with at least one tie rod (29) being provided in order to mutually brace the top structures (8) of the adjacent opposite modules (1) at their upper rim, and further that the upper joint cover (34) is designed as a ridge plate straddling the joint between the mutually attachable roof wings (31) and can preferably be slide-mounted onto guide rails (36) provided on the roof wings.

8. A mobile cabin according to any of the preceding Claims, **characterised in that** provision is made for gable elements (34) which can be mounted above the struts in the area of the end walls of the cabin.

9. A mobile cabin according to any of the preceding Claims, **characterised in that** the lateral wall (46) of each top structure (8) comprises a lower section (46a) which is permanently attachable to the subframe (7) and, articulated thereto, an upper section (46b) to which the associated half (47) is rigidly attached.

10. A mobile cabin according to Claim 9, **characterised in that** the vertical struts (23) of the lateral wall (46) of each top structure (8) comprise two sections (48, 49) adjacent to each other which are swivel-mounted by a swivel arrangement (50) at the mutually facing ends thereof and are removably attachable to each other by removable mounting means (56), with the sections (48, 49) of the struts (23) being preferably provided with flanges (52, 53) at their mutually facing ends, which in the region of their rims facing the cabin interior are joined with each other by an articulated connection (50) having a swivel angle of at least 90 degrees and which are removably attachable to each other by bolts extending through them.

11. A mobile cabin according to any of the preceding Claims, **characterised in that** the sum of the height of the upper wall section (46b) and the height of the associated roof half (47) exceeding the height of such upper wall section (46b) maximally equals the width of the subframe (7) and that the vertical projection of the roof half (47) maximally corresponds to the height of the lower wall section (46a).

12. A mobile cabin according to any of the preceding Claims, **characterised in that** the roof half (47) comprises a lower longitudinal beam (59) which is firmly connected by means of gusset plates (60) with the upper ends of the upper sections (49) of the wall-side struts (23).

13. A mobile cabin according to any of the preceding Claims, **characterised in that** the mutually facing upper ends of the roof halves (47) of the two modules (1) are attachable to each other with a bridge member (63) being interposed having lateral flanks which are V-inclined relative to each other.

14. A mobile cabin according to any of the preceding Claims, **characterised in that** at least a part of the beams (57) of the roof half (47) is connected with the lower section of each associated wall-side strut (23) by means of an extendable strut (23) having hinges attached to its ends, such strut preferably comprising a middle threaded rod (67) the two ends of which are in engagement with threaded sleeves (68) hinged to the lower strut section (48) and the roof-side beam (57), respectively.

15. A mobile cabin according to any of the preceding Claims, **characterised in that** the top structures (8) of the mutually adjacent modules (1) can be braced by cross beams (61) removably attached to the roof-side beams (57), and that a cross-beam (62) which is divided in the middle rests on the upper ends of the struts (23) provided outside the side wall, the ends of such cross-beam (62) resting on brackets (63a) arranged at the upper ends of the side-wall struts (23), which brackets (63a) are in the same plane as such cross-beam (62).

16. A mobile cabin according to any of the preceding Claims 8 to 15, **characterised in that** the struts (23) provided outside the side wall (46) are likewise divided into two sections (48, 49) which are bolted to one another at their mutually facing ends.

## Revendications

1. Cabine mobile, en particulier cabine humide mobile, telle qu'une cabine de lavage de véhicules automobiles, une cabine à contrôler l'étanchéité de véhicules automobiles etc., qui se compose d'au moins deux modules (1) disposés par paires l'un à côté de l'autre et construits à l'instar de conteneurs mobiles avec des dimensions convenables pour être transportés par route, **caractérisée par le fait que** lesdits modules présentent respectivement un châssis de base (7) ainsi qu'une disposition de superstructure (8) qui peut être reçue sur celui-ci, les châssis de base (7) qui peuvent être reliés entre eux dans la zone de leurs flancs montrant l'un vers l'autre présentant respectivement un cadre de base (9) qui comprend des moyens de déplacement de conteneur, et les dispositions de superstructure (8) qui présentent au moins respectivement une paroi latérale (46) et une moitié de toit (47) étant ouvertes dans la zone des côtés montrant l'un vers l'autre et pouvant être enjambées, dans la zone du joint entre les moitiés de toit (47) montrant l'une vers l'autre, par un dispositif formant pont (34 ; 63).

2. Cabine mobile selon la revendication 1, **caractérisée par le fait que**, pour former les moyens de déplacement de conteneur, chaque châssis de base (7) est pourvu de galets de roulement (3) montés sur ledit cadre de base (9) ainsi que de moyens de raccordement (4) pour au moins un dispositif de réception (5) détachable.

3. Cabine mobile selon l'une des revendications précédentes, **caractérisée par le fait que** chaque châssis de base (7) présente un dispositif périphérique d'appui qui fait saillie vers le haut de son cadre de base (9), et au moins une cuve (11) qui peut être mise en place dans l'espace entouré par ledit dispositif d'appui et qui est pourvue de préférence de tubulures de raccord (13) pour des conduites d'alimentation et/ou d'évacuation (14), ainsi qu'un plancher (15) en forme de grille qui s'étend sur ladite cuve et est appuyé par le dispositif périphérique d'appui, au-dessous dudit plancher étant prévue une couverture centrale (19) qui couvre la distance existant entre les cuves (11) situées de part et d'autre.

4. Cabine mobile selon la revendication 3, **caractérisée par le fait que** chaque châssis de base (7) est pourvu d'une couverture de bord (20) qui couvre la distance séparant la cuve (11) des parois voisines de la cabine, et que ladite couverture centrale (19) et les couvertures de bord (20) sont réalisées de préférence comme tôles de drainage montées sur le dispositif d'appui.

5. Cabine mobile selon l'une des revendications 3 ou 4, **caractérisée par le fait que** le dispositif d'appui est formé par des tronçons verticaux de support (12) espacées les uns des autres et montés sur le cadre de base (9), et que la disposition de superstructure (8) présente des poteaux verticaux (23) qui sont disposés à distance des tronçons de support (12) et qui sont reliés aux tronçons de support (12) alignés avec eux, de préférence sont bridés au tronçon de support respectivement associé en intercalant la tôle de drainage formant la couverture de bord (20), et qu'une peau de cabine (27) peut être fixée sur lesdits poteaux verticaux (23) et sur les tronçons de support (12), cette peau présentant de préférence une fente (28) à travers laquelle passe la tôle de drainage formant la couverture de bord (20).

6. Cabine mobile selon l'une des revendications précédentes, **caractérisée par le fait que** les dispositions de superstructure (8) sont pourvues, sur la face frontale, d'ouvertures de porte (37) contiguës les unes aux autres auxquelles sont associés de préférence des battants de porte (38) déplaçables en sens opposé, et que l'on prévoit - dans la zone des ouvertures de porte (37) - des rampes de montée et/ou de descente (18) qui peuvent être rapportées sur le châssis de base (7).

7. Cabine mobile selon l'une des revendications précédentes, **caractérisée par le fait que** chaque disposition de superstructure (8) est pourvue d'une aile de toit (31) qui est reçue à pivotement sur une paroi latérale par l'intermédiaire de paliers d'articulation (30) disposés de préférence dans la zone des extrémités supérieures de poteaux verticaux associés (23), ladite aile de toit pouvant, dans une position inclinée donc oblique, être fixée avec son bord supérieur sur l'aile de toit (31) de la disposition de superstructure (8) du module voisin (1) et pouvant, dans la position de transport où elle est basculée vers le bas de manière à prendre une position à peu près horizontale, être appuyée par au moins une entretoise d'écartement (32) sur le châssis de base (7), au moins un tirant d'ancrage (29) étant prévu qui relie entre elles, sur leur bord supérieur, les dispositions de superstructure (8) des modules (1) voisins les uns des autres, et la couverture supérieure (34) du joint étant réalisée comme tôle de comble qui couvre le joint entre les ailes de toit (31) lesquelles peuvent être fixées l'une sur l'autre, et que l'on peut faire glisser, de préférence, sur des guides (36) disposés sur les ailes de toit.

8. Cabine mobile selon l'une, des revendications précédentes, **caractérisée par le fait que** des éléments de pignon (34) sont prévus dans la zone des faces frontales de la cabine, qui peuvent être montés au-dessus desdits poteaux verticaux.

9. Cabine mobile selon l'une des revendications précédentes, **caractérisée par le fait que** la paroi latérale (46) de chaque disposition de superstructure (8) présente une section inférieure (46a) laquelle peut être fixée de façon stationnaire sur le châssis de base (7) ainsi qu'une section supérieure (46b) laquelle est articulée sur la section inférieure et sur laquelle la moitié associée (47) est montée rigidement.

10. Cabine mobile selon la revendication 9, **caractérisée par le fait que** les poteaux verticaux (23) de la paroi latérale (46) de chaque disposition de superstructure (8) comprennent respectivement deux sections (48, 49) contiguës l'une à l'autre qui, sur les extrémités montrant l'une vers l'autre, sont reliées entre elles à pivotement au moyen d'une disposition articulée (50) et peuvent être fixées l'une sur l'autre de manière amovible par le biais de moyens de fixation amovibles (56), les sections (48, 49) des poteaux verticaux (23) étant pourvues, aux extrémités montrant l'une vers l'autre, de préférence de brides (52, 53) qui sont liées l'une à l'autre par ladite disposition articulée (50) laquelle est disposée dans la zone de leur bord montrant vers la face interne de la cabine et présente un angle de pivotement d'au moins 90°, et qui peuvent être fixées entre elles de manière amovible par l'intermédiaire de vis (56) traversant celles-ci.

11. Cabine mobile selon l'une des revendications précédentes, **caractérisée par le fait que** la somme de la hauteur de la section supérieure de paroi (46b) et de la hauteur de la moitié associée de toit (47), qui dépasse celle-ci correspond tout au plus à la largeur du châssis de base (7), et que la projection verticale de la moitié de toit (47) correspond tout au plus à la hauteur de la section inférieure de paroi (46a).

12. Cabine mobile selon l'une des revendications précédentes, **caractérisée par le fait que** la moitié de toit (47) présente une poutre longitudinale inférieure (59) qui est reliée solidement, par des goussets d'assemblage (60), à l'extrémité supérieure des sections supérieures (49) des poteaux verticaux (23) de la paroi latérale.

13. Cabine mobile selon l'une des revendications précédentes, **caractérisée par le fait que** les extrémités supérieures montrant l'une vers l'autre, des moitiés de toit (47) des deux modules (1) peuvent être fixées l'une sur l'autre avec interposition d'une pièce formant pont (63) qui présente des flancs latéraux inclinés en V l'un contre l'autre.

14. Cabine mobile selon l'une des revendications précédentes, **caractérisée par le fait qu'**au moins une partie des poutres (57) de la moitié de toit (47) est reliée à la section inférieure du poteau vertical (23) respectivement associé de la paroi latérale au moyen d'une entretoise (66) articulée sur ses extrémités qui peut être rallongée et qui présente de préférence une barre filetée centrale (67) qui est en prise de part et d'autre avec des douilles filetées (68) articulées sur la section inférieure de poteau vertical (48) ou bien sur la poutre (57) du toit.

15. Cabine mobile selon l'une des revendications précédentes, **caractérisée par le fait que** les dispositions de superstructure (8) des modules (1) voisins l'un de l'autre peuvent être reliées entre elles par des poteaux transversaux (61) qui peuvent être montés de manière amovible sur les poutres (57) du toit, et qu'une poutre transversale (62) divisée en son centre prend appui sur les extrémités supérieures des poteaux verticaux (23) prévus à l'extérieur de la paroi latérale, les extrémités de ladite poutre transversale s'appuyant sur des consoles (63a) montées à l'extrémité supérieure des poteaux verticaux (23) de la paroi latérale qui sont coplanaires à cela.

16. Cabine mobile selon l'une des revendications précédentes 8 à 15, **caractérisée par le fait que** les poteaux verticaux (23) prévus à l'extérieur de la paroi latérale (46) sont divisés eux aussi en deux sections (48, 49) qui sont bridées l'une à l'autre sur les extrémités montrant l'une vers l'autre.
